# EUROPEAN PATENT APPLICATION

(11) **EP 4 817 761 A1**
(43) Date of publication of application: **07.10.2026**
(21) Application number: 26161516.5
(22) Date of filing: 02.03.2026
(51) Int. Cl.: B22F 1/054

(54) **SEED-ASSISTED SYNTHESIS METHOD FOR PT-NI HOLLOW NANOSTRUCTURES**

(30) Priority: 04.03.2025 US 202519070264
(71) Applicant: HONDA MOTOR CO., LTD., Tokyo 105-8404 (JP)
(72) Inventor: CHEN, Shutang, Livermore, 94550 (US); CHEN, Gugang, Palo Alto, 94306 (US)
(74) Representative: Kiwit, Benedikt

(57) **Abstract**

Aspect of the present disclosure generally relate to methods of preparing nanocatalyst structures. More specifically, aspects of the present disclosure relate to preparing hollow nanocubic structures via a seed-assisted synthetic process. In some aspects, a method for preparing hollow nanostructures includes preparing a solution of platinum (Pt) seeds. The method further includes introducing a metal source having a metal compound to the solution of Pt seeds to form a solution of core-shell nanocubes. The core-shell nanocubes include a Pt-metal alloy. The method further includes etching an interior portion of at least one of the core-shell nanocubes to form a hollow nanocubic structure.

## Description

This application is based on and claims the benefit of priority from U.S. Patent Application No. 19/070,264, filed on March 4,2025.

### FIELD

Aspect of the present disclosure generally relate to methods of preparing nanocatalyst structures. More specifically, aspects of the present disclosure relate to preparing hollow nanocubic structures via a seed-assisted synthetic process.

### BACKGROUND

Platinum-based (Pt-based) catalysts are widely recognized for their exceptional performance in oxygen reduction reactions, making them a cornerstone in fuel cell technology. However, the high cost and limited durability of conventional Pt catalysts present significant barriers to large-scale commercial adoption. While numerous studies have explored synthesis strategies using principles like galvanic replacement or the Kirkendall effect, further advancements are crucial to unlocking the full potential of Pt-M hollow nanocatalysts for sustainable fuel cell applications.

Thus, there is a need to develop new Pt-based catalysts and methods of producing such.

### SUMMARY

Aspect of the present disclosure generally relate to methods of preparing nanocatalyst structures. More specifically, aspects of the present disclosure relate to preparing hollow nanocubic structures via a seed-assisted synthetic process.

In some aspects, a method for preparing hollow nanostructures includes preparing a solution of platinum (Pt) seeds. The method further includes introducing a metal source having a metal compound to the solution of Pt seeds to form a solution of core-shell nanocubes. The core-shell nanocubes include a Pt-metal alloy. The method further includes etching an interior portion of at least one of the core-shell nanocubes to form a hollow nanocubic structure.

In some aspects, a method for preparing nanoframe structures includes preparing a solution of platinum (Pt) seeds. The method further includes introducing a metal source having a metal compound to the solution of Pt seeds to form a solution of core-shell nanocubes. The core-shell nanocubes includes a Pt-metal alloy. The method further includes performing a platinum ion treatment on the core-shell nanocubes to stabilize the Pt-metal alloy. The method further includes etching an interior portion of at least one of the core-shell nanocubes to form a hollow nanocubic structure.

In some aspects, a method for preparing nanoframe structures includes preparing a solution of platinum (Pt) seeds. The method further includes introducing a metal source having a metal compound to the solution of Pt seeds to form a solution of core-shell nanostructure. The core-shell nanocubes includes a Pt-metal alloy. The method further includes performing a platinum ion treatment on the core-shell nanostructure to stabilize the Pt-metal alloy. The method further includes etching an interior portion of at least one of the core-shell nanostructure to form a hollow nanostructure. The hollow nanostructure includes a side length in a range from about 10 nm to about 2 µm.

### BRIEF DESCRIPTION OF THE DRAWINGS

So that the manner in which the above recited features of the present disclosure may be understood in detail, a more particular description of the disclosure, briefly summarized above, may be had by reference to aspects, some of which are illustrated in the appended drawings. It is to be noted, however, that the appended drawings illustrate only exemplary aspects and are therefore not to be considered limiting of its scope, for the disclosure may admit to other equally effective aspects.
Figure 1 is a process flow diagram, according to one or more aspects.
Figure 2 is an illustrative process for forming hollow nanostructures, according to one or more aspects.
Figure 3A is an SEM image of core-shell structure, according to one or more aspects.
Figure 3B is an SEM image of a core-shell nanostructure, according to one or more aspects.
Figure 3C is an SEM image of a hollow nanostructure, according to one or more aspects.
Figure 4A is an SEM image of core-shell nanostructures, according to one or more aspects.
Figure 4B is an SEM image of core-shell nanostructures, according to one or more aspects.
Figure 4C is an SEM image of core-shell nanostructures, according to one or more aspects.
Figure 4D is an SEM image of core-shell nanostructures, according to one or more aspects.
Figure 4E is an SEM image of core-shell nanostructures, according to one or more aspects.
Figure 4F is an SEM image of core-shell nanostructures, according to one or more aspects.
Figure 4G is an SEM image of core-shell nanostructures, according to one or more aspects.
Figure 4H is an SEM image of core-shell nanostructures, according to one or more aspects.
Figure 5A is an SEM image of core-shell nanostructures, according to one or more aspects.
Figure 5B is an SEM image of core-shell nanostructures, according to one or more aspects.
Figure 5C is an SEM image of core-shell nanostructures, according to one or more aspects.
Figure 5D is an SEM image of core-shell nanostructures, according to one or more aspects.
Figure 6 is graphical representation of an XRD analysis, according to one or more aspects.
Figure 7A is an SEM image of core-shell nanostructures, according to one or more aspects.
Figure 7B is an SEM image of core-shell nanostructures, according to one or more aspects.
Figure 7C is an SEM image of hollow nanostructures, according to one or more aspects.
Figure 7D is graphical representation of an XRD analysis, according to one or more aspects.
Figure 8A is an SEM image of core-shell nanostructures, according to one or more aspects.
Figure B is an SEM image of core-shell nanostructures, according to one or more aspects.
Figure 8C is an SEM image of hollow nanostructures, according to one or more aspects.
Figure 8D is graphical representation of an XRD analysis, according to one or more aspects.
Figure 9A is an SEM image of core-shell nanostructures, according to one or more aspects.
Figure 9B is an SEM image of core-shell nanostructures, according to one or more aspects.
Figure 9C is an SEM image of hollow nanostructures, according to one or more aspects.
Figure 9D is graphical representation of an XRD analysis, according to one or more aspects.
Figure 10A is an SEM image of core-shell nanostructures, according to one or more aspects.
Figure 10B is an SEM image of core-shell nanostructures, according to one or more aspects.
Figure 10C is an SEM image of hollow nanostructures, according to one or more aspects.
Figure 10D is graphical representation of an XRD analysis, according to one or more aspects.
Figure 11A is an SEM image of core-shell nanostructures, according to one or more aspects.
Figure 11B is an SEM image of core-shell nanostructures, according to one or more aspects.
Figure 11C is an SEM image of hollow nanostructures, according to one or more aspects.
Figure 11D is graphical representation of an XRD analysis, according to one or more aspects.
Figure 12 is a graphical representation of a cyclic voltammetry analysis, according to one or more aspects.
Figure 13 is a graphical representation of a linear sweeping voltammetry analysis.

### DETAILED DESCRIPTION

The present disclosure provides a method by which to prepare hollow nanostructures. More specifically, the method disclosed herein uses a seed-assisted process to form hollow nanocubic structures for potential use in catalyst operations. The hollow nanocubic structures prepared via the method disclosed herein exhibit a catalytic surface area, which allows for increased electrochemical performance.

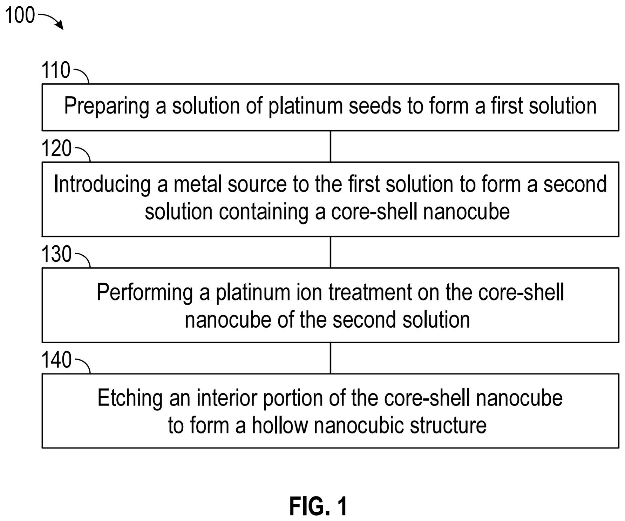

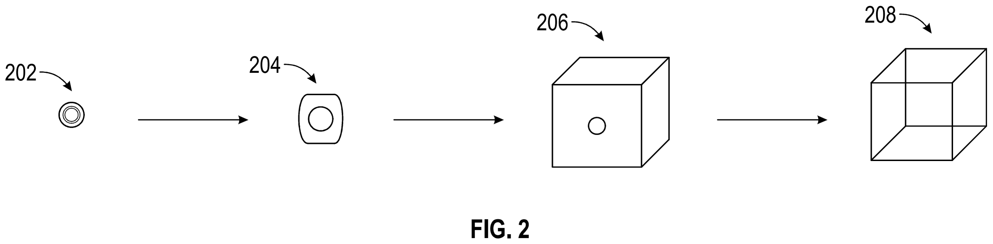

As described herein, hollow nanostructures (e.g., nanocatalysts) may be formed from a platinum (Pt) - metal alloy (Pt-M) according to the method 100, shown in FIG. 1. Additionally or alternatively, the method 100 may be illustrated by process scheme 200 shown in FIG. 2. Generally, Pt-M hollow nanostructures may be formed by preparing a solution of Pt seeds 202 (e.g., operation 110), and introducing a metal source (e.g., a nickel based compound) thereto to form a core-shell structure 204 composed of a Pt-M alloy formed therefrom (e.g., operation 120). The core-shell structure 204 may then grow into a core-shell nanostructure 206 (e.g., a nanocubic core-shell nanostructure), as would be enable by the surrounding solution (e.g., operation 120). The core-shell nanostructure 206 may be subjected to an ion treatment process (e.g., operation 130) to stabilize the edges of the core-shell nanostructure 206, followed by an etching operation (e.g., operation 140) to remove an interior portion of the core-shell nanostructure 206 to form a hollow nanostructure 208.

At operation 110 of the method 100, a solution of Pt seeds 202 is prepared by introducing a Pt source to a solution. The Pt source may include various Pt compounds such as metal hydroxides, metal chlorides, metal acetylacetonates, and metal salts. A Pt ion source of the present disclosure may include hexahydroxy platinic acid (H₂Pt(OH)₆), chloroplatinic acid hexahydrate (e.g., H₂PtCl•6H₂O), hexachloroplatinate salt (e.g., sodium hexachloroplatinate hexahydrate), platinum chloride, platinum acetylacetonate, hydrates thereof, and combinations thereof. The Pt ion source may include chloroplatinic acid hexahydrate.

Operation 110 may include combining the Pt source with an alkylamine in order to provide the solution of Pt seeds 202. The alkylamine may act as a solvent, a ligand, or both. Alkylamines of the present disclosure may include tetradecylamine (TDA), oleylamine (OLA), hexadectylamine (HDA), dodecylamine (DDA), octadecylamine (ODA), and combinations thereof. The Pt seeds 202 may be composed of a complex resulting from the Pt source interacting with the alkylamine to form a complex, such as Pt-OLA, Pt-HDA, Pt-DDA, Pt-ODA, Pt-TDA, or a combination thereof. The molar ratio of Pt source relative to the alkylamine within the solution of Pt seeds 202 may be in a range from about 1:1 to about 1:200, such as from about 1:10 to about 1:160, such as from about 1:10 to about 1:50, such as from about 1:50 to about 1:100, such as from about 1:100 to about 1:160. The solution of Pt seeds 202 may include one or more solvents, such as octadecene, anisole, phenyl ether, and combinations thereof. The solution of Pt seeds 202 may include any number of Pt seeds 202, such that solution of Pt seeds 202 is composed of about 0.01 wt% to about 0.2 wt% of Pt seeds 202, such as about 0.05 wt% to about 0.15 wt%, such as about 0.08 wt% to about 0.12 wt%, alternatively about 0.01 wt% to about 0.05 wt%, alternatively about 0.05 wt% to about 0.08 wt%, alternatively about 0.08 wt% to about 0.1 wt%, alternatively about 0.1 wt% to about 0.12 wt%, alternatively about 1.2 wt% to about 1.5 wt%, alternatively about 0.15 wt% to about 0.2 wt%.

At operation 120 of the method 100, a metal source is introduced to the solution of Pt seeds 202 to form a reaction solution composed of one or more core-shell structures 204. The metal source may include one or more metal compounds such as metal chlorides, metal acetylacetonates, and metal salts. The metal compound may include a Group 8-12 metal (M), such as nickel (Ni), iron (Fe), Cobalt (Co), palladium (Pd), silver (Ag), gold (Au), or a combination thereof. The metal source may include a Ni containing compound, such as nickel (II) acetylacetonate (e.g., C₁₀H₁₄NiO₄). Additionally or alternatively, the metal source may include a solution prepared from a combination of a metal compound and an alkylamine, a solvent, or a combination thereof. The alkylamine may be the same as or different from the alkylamine used to form the solution of Pt seeds. The metal source may include a solution of the metal compound and the alkylamine at a molar ratio in a range from about 1:1 to about 1:500, such as about 1:10 to about 1:360, such as about 1:10 to about 1:50, such as about 1:50 to about 1:100, such as about 1:100 to about 1:150, such as about 1:150 to about 1:200, such as about 1:200 to about 1:250, such as about 1:250 to about 1:300, and such as about 1:300 to about 1:360. The metal source may include one or more solvents, such as octadecene, anisole, phenyl ether, and combinations thereof. The metal source may include the metal compound in an amount ranging from about 0.2 wt% to about 1.6 wt%, such as about 0.4 wt% to about 1.4 wt%, such as about 0.8 wt% to about 1.0 wt%, alternatively about 0.2 wt% to about 0.4 wt%, alternatively about 0.4 wt% to about 0.8 wt%, alternatively about 1.0 wt% to about 1.4 wt%, alternatively about 1.4 wt% to about 1.6 wt%.

The reaction solution formed in operation 120 of the method 100 via the addition of the metal source to the solution of Pt seeds may have a molar ratio of Pt relative to M in a range from about 2:1 to about 1:20 (Pt:M), such as about 1:1 to about 1:15, such as about 1:1 to about 1:10, such as about 1:4 to about 1:10, such as about 1:6 to about 1:8. The reaction solution formed in operation 120 of the method 100 may include chloroplatinic acid hexahydrate as the Pt source of the Pt seeds and nickel (II) acetylacetonate as the metal compound of the metal source. The molar ratio of chloroplatinic acid hexahydrate relative to nickel (II) acetylacetonate in the reaction solution formed in operation 120 may be in a range of about 2:1 to about 1:20 (H₂PtCl•6H₂O:C₁₀H₁₄NiO₄), such as about 1:1 to about 1:15, such as about 1:1 to about 1:10, such as about 1:4 to about 1:10, such as about 1:6 to about 1:8.

Oxygen may be removed from the solution of Pt seeds and/or the metal source via any suitable method known to one of ordinary skill in the art, such as purging with an inert gas. Operation 120 of the method 100 may include combining the solution of Pt seeds and the metal source under an inert gas flow. An inert gas may include one or more of nitrogen gas, argon gas, and combinations thereof. The solution of Pt seeds, the metal source, or both may be heated to a reaction temperature in a range of about 100 °C to about 300 °C prior to the combinations of such components in operation 120. The reaction solution formed in operation 120 of the method 100 via the addition of the metal source to the solution of Pt seeds may be heated to a reaction temperature in a range from about 100 °C to about 300 °C and allowed to react for a reaction time in a range of about 10 minutes to about 180 minutes, such as about 20 minutes to about 160 minutes, such as about 40 minutes to about 120 minutes, such as about 70 minutes to about 90 minutes, alternatively about 20 minutes to about 40 minutes, alternatively about 40 minutes to about 70 minutes, alternatively about 90 minutes to about 120 minutes, alternatively about 120 minutes to about 160 minutes.

During operation 120 of the method 100, a Pt-M alloy is formed via the interaction of the metal compound of the metal source with the Pt seeds of the solution of Pt seeds. The Pt-M alloy may be a Pt-Ni alloy, a Pt-Fe alloy, a Pt-Co alloy, a Pt-Pd alloy, a Pt-Ag alloy, a Pt-Au alloy, or a combination thereof. The Pt-M alloy may be a Pt-Ni alloy. In operation 120, the Pt-M alloy forms a core-shell structure 204 that grows/develops into a core-shell nanostructure 206 during/throughout the duration of operation 120. The core-shell nanostructure 206 may include any one or more shapes, such as a face-centered cubic nanostructure, a cubic nanostructure, a tetrahedral nanostructure, an octahedral nanostructure, a rhombic dodecahedral nanostructure, a decahedral nanostructure, an icosahedral nanostructure, a triangular prism nanostructure, a hexagonal prism nanostructure, a cuboctahedral nanostructure, a rod-shaped nanostructure, a bar-shaped nanostructure, a wire-shaped nanostructure, or combinations thereof. The core-shell nanostructure 206 may be a core-shell cubic nanostructure having a side length in a range from about 10 nm to about 2 µm, such as about 20 nm to about 1 µm, such as about 50 nm to about 500 nm, such as about 100 nm to about 400 nm, such as about 200 nm to about 350 nm, such as about 250 nm to about 350 nm. The core-shell cubic nanostructure may include a composition having a molar ratio of Pt relative to M in a range from about 2:1 to about 1:20 (Pt:M), such as about 1:1 to about 1:15, such as about 1:1 to about 1:10, such as about 1:4 to about 1:10, such as about 1:6 to about 1:8.

Without wishing to be bound by theory, it is believed that the concentration of metal ions in the reaction solution may affect metal nanocatalyst nucleation and/or growth rate. That is to say that a higher metal ion concentration resulting from the metal source may provide a slower nucleation and/or growth rate when compared with lower concentrations. It should be understood that the concentration of the Pt compound in the reaction solution will correspond with the concentration of the Pt compound in the solution of Pt seeds provided to the reaction solution. Similarly, the concentration of the metal ions in the reaction solution will correspond with the concentration of the metal compound of the metal source provided to the reaction solution.

The concentration of the Pt compound provided to the reaction solution via the solution of Pt seeds is in a range of about 0.002 mol/L to about 0.1 mol/L, such as about 0.008 mol/L to about 0.08 mol/L, such as about 0.01 mol/L to about 0.05 mol/L, alternatively about 0.002 mol/L to about 0.008 mol/L, alternatively about 0.008 mol/L to about 0.01 mol/L, alternatively about 0.05 mol/L to about 0.08 mol/L, alternatively about 0.08 mol/L to about 0.1 mol/L. The concentration of the metal compound provided to the reaction solution via the metal source is in a range of about 0.00856 mol/L to about 5.56 mol/L, such as about 0.01 mol/L to about 5 mol/L, such as about 0.1 mol/L to about 3 mol/L, such as about 1 mol/L to about 2 mol/L, alternatively about 0.00856 mol/L to about 0.01 mol/L, alternatively about 0.01 mol/L to about 0.1 mol/L, alternatively about 0,1 mol/L to about 1 mol/L, alternatively about 2 mol/L to about 3 mol/L, alternatively about 3 mol/L to about 5 mol/L, alternatively about 5 mol/L to about 5.56 mol/L.

The core-shell nanostructures 206 may be collected and subjected to a washing process, subsequent the completion of operation 120. The washing process may include combining the reaction solution with a solvent, centrifuging the solution, and/or discarding the supernatant as known in the art. The solvent combined with the reaction solution may include at least one hydrophobic solvent, at least one organic solvent, or a combination thereof. The solvent combined with the reaction solution may include hexane, benzene, toluene, xylene, chlorobenzene, dichlorobenzene, trichlorobenzene, cyclohexane, carbon tetrachloride chloroform, aromatic compounds (e.g., benzene, toluene), alcohols (e.g. ethanol, methanol), esters, ethers, ketones (e.g., acetone), amines, nitrated and halogenated hydrocarbons, and combinations thereof. It should be understood that the resulting product may be stored in a solvent as described herein, as known in the art. The reaction solution may be cooled by at least about 20 °C, prior to one or more of the washing steps, such as by at least about 30 °C, such as by at least about 40 °C, such as by at least about 50 °C, such as by at least about 60 °C, such as by at least about 70 °C, such as by at least about 80 °C, such as by at least about 90 °C, such as by at least about 100 °C, such as by at least about 110 °C.

In operation 130 of the method 100, the core-shell nanostructures 206 formed and isolated during operation 120 are subjected to a platinum ion treatment to stabilize the edges of the core-shell nanostructures 206. Generally, the platinum ion treatment includes preparing a reaction solution having the core-shell nanostructures 206, an alkylamine (as described above), and a solvent (as described above). The reaction solution is purged with an inert gas, and a stock solution containing a Pt-alkylamine precursor compound is introduced to the reaction solution. The Pt-alkylamine precursor compound may be formed from any one or more Pt compounds and alkylamines described above. The reaction solution may be heated to a reaction temperature of about 100 °C to about 300 °C and allowed to react for about 10 minutes to about 180 minutes, such as about 20 minutes to about 160 minutes, such as about 40 minutes to about 120 minutes, such as about 70 minutes to about 90 minutes, alternatively about 20 minutes to about 40 minutes, alternatively about 40 minutes to about 70 minutes, alternatively about 90 minutes to about 120 minutes, alternatively about 120 minutes to about 160 minutes. The resulting ion treated core-shell nanostructures may be collected and subjected to a washing process, subsequent the completion of operation 130. The washing process may include combining the reaction solution with a solvent, centrifuging the solution, and/or discarding the supernatant, as described above.

In operation 140 of the method 100, the ion treated core-shell nanostructures may be subjected to an etching process to etch an interior portion ion treated core-shell nanostructures to form one or more hollow nanostructures 208 (alternatively referred to as a hollow nanoframe). The etching process of operation 140 may be performed by immersing, soaking, introducing, or otherwise subjecting the ion treated core-shell nanostructures to an etchant solution including an acid compound. The acid compound may be an inorganic acid, an organic acid, or combinations thereof, such as acetic acid (CH₃COOH), carbonic acid (H₂CO₃), propionic acid (CH₃CH₂COOH), perchloric acid (HClO₄), phosphoric acid (H₃PO₄), sulfuric acid (H₂SO₄), nitric acid (HNO₃), hydrochloric acid (HCl), or combinations thereof. The etchant solution may be an aqueous solution. The concentration of acid compound in the etchant solution may be in a range from about about 0.01 M to about 10 M, such as about 0.1 M to about 2 M, such as about 0.5 M to about 1.5 M, such as about 1 M to about 1.25 M. The molar ratio of the platinum compound of the ion treated core-shell nanostructures relative to the acid compound in the etchant solution is in a range from about 1:1 to about 1:10, such as about 1:2 to about 1:8, such as about 1:4 to about 1:6, alternatively about 1:1 to about 1:2, alternatively about 1:2 to about 1:4, alternatively about 1:6 to about 1:8, alternatively about 1:8 to about 1:10. The weight ratio of the platinum compound of the ion treated core-shell nanostructures relative to the acid compound in the etchant solution is in a range from about 10:1 to about 1:10, such as about 8:1 to about 1:8, such as about 4:1 to about 1:4, alternatively about 10:1 to about 8:1, alternatively about 8:1 to about 4:1, alternatively about 4:1 to about 1:1, alternatively about 1:1 to about 1:4, alternatively about 1:4 to about 1:8, alternatively about 1:8 to about 1:10.

Subsequent operation 140 of the method 100, the solution of operation 140 may be subjected to filtration, separation, cleaning, quenching, washing, purification, and/or other suitable processes to remove undesired components and isolate hollow nanostructures 208 therefrom. The solution of operation 140 having the hollow nanostructures 208 may be centrifuged to separate the hollow nanostructures 208 from therefrom. Additionally or alternatively, the hollow nanostructures 208 may be washed one or more solvents, such as water, acetone, ethanol, methanol, hexane, pentane, toluene, diethyl ether, tetrahydrofuran, dichloromethane, chloroform, ethyl acetate, dimethylformamide, acetonitrile, benzene, isopropanol, n-butanol, n-propanol, and combinations thereof. Mixtures of two or more of these solvents, in suitable proportions, may be utilized for washing, purifying, and/or otherwise separating the hollow nanostructures 208 from other components in the solution of operation 140. As an example, a solvent or a mixture of solvents may be added to the third bimetallic structure and the resultant mixture centrifuged. The supernatant may be discarded and the remaining pellet may be dispersed in a suitable solvent or mixture of solvents.

A hollow nanostructure 208 prepared via the method 100 may be a hollow nanocubic structure (alternatively referred to as a hollow cubic nanoframe) having a side length in a range from about 10 nm to about 2 µm; such as from about 20 nm to about 1 µm; such as from about 50 nm to about 500 nm; such as from about 100 nm to about 400 nm; such as from about 200 nm to about 350 nm; such as from about 250 nm to about 350 nm. The hollow nanocubic structures prepared via the method 100 may have a surface area in a range from about 600 nm² to about 24 µm², such as from about 1350 nm² to about 13.5 µm², such as from about 2400 nm² to about 6 µm², such as from about 15000 nm² to about 1.5 µm², such as from about 60000 nm² to about 0.24 µm².

A hollow nanostructure 208 prepared via the method 100 may have an electrochemical surface area (ECSA) in a range from about 5 m²/g_{(Pt)} to about 280 m²/g_{(Pt)} as determined by cyclic voltammetry, such as about 10 m²/g_{(Pt)} to about 250 m²/g_{(Pt)}, such as about 30 m²/g_{(Pt)} to about 220 m²/g_{(Pt)}, such as about 50 m²/g_{(Pt)} to about 200 m²/g_{(Pt)}, such as about 80 m²/g_{(Pt)} to about 180 m²/g_{(Pt)}, such as about 100 m²/g_{(Pt)} to about 160 m²/g_{(Pt)}, such as about 120 m²/g_{(Pt)} to about 140 m²/g_{(Pt)}. A hollow nanostructure 208 prepared via the method 100 may have a mass activity in a range from about 0.1 A/mg_{(Pt)} to about 6.0 A/mg_{(Pt)} as determined by cyclic voltammetry, such as from about 0.2 A/mg_{(Pt)} to about 5.0 A/mg_{(Pt)}, such as from about 0.3 A/mg_{(Pt)} to about 4.0 A/mg_{(Pt)}, such as from about 0.4 A/mg_{(Pt)} to about 3.0 A/mg_{(Pt)},such as from about 0.5 A/mg_{(Pt)} to about 2.0 A/mg_{(Pt)}, such as from about 0.6 A/mg_{(Pt)} to about 1.0 A/mg_{(Pt)},such as from about 0.7 A/mg_{(Pt)} to about 0.85 A/mg_{(Pt)}.

Hollow nanostructure 208 of the present disclosure may be, at least, a portion of the catalyst composition. The hollow nanocubic structures 208 and catalyst compositions including such may be used in fuel cells (e.g., proton exchange membrane fuel cells; "PEMFCs"), fuel cell vehicles (e.g., automobiles, buses, motorcycles, forklifts, etc.), watercrafts (e.g., submarines and boats), portable applications, and stationary applications. Relative to conventional catalysts, the hollow nanostructure 208 of the present disclosure may have a higher concentration of catalytic sites and a higher surface area to perform reactions. The higher concentration of catalytic sites and higher surface area of the hollow nanostructure 208 may be due to the hollow portion providing increased surface area.

### EXAMPLES

### Materials

Copper chloride (99.0%), tributylphosphine (TBP, 99%), trioctylphosphine (TOP, 97%), oleylamine (OLA, 70%), nickel acetylacetonate, cobalt acetylacetonate, palladium (II) acetylacetonate, silver nitrate, tetrachloroauric(III) acid trihydrate (99%), Chloroplatinic acid hexahydrate, toluene (99.9%), acetone (99%), and chloroform (99.9%), 1-octadecene (ODE, 98%) were purchased from Sigma-Aldrich. Tetradecylamine (TDA, >96%) was purchased from TCI. Hexane (99%), methanol (99%), and ethanol (200 proof) were purchase from Fisher Chemicals. All chemicals were used as received.

### Preparation of core-shell nanocubic structures

Pt-Ni nanocubes were synthesized in the organic phase. 12.5 g tetradecylamine, TDA (CH₃(CH₂)₁₃NH₃), used as the solvent and ligand, was added to a dry 3-neck flask. To this flask, 30 mg hexahydroxy platinic acid (H₂Pt(OH)₆) and 208 mg nickel (II) acetylacetonate (C₁₀H₁₄NiO₄), were added obtaining a Pt:Ni mole ratio of 1:8. Under argon flow protection and continuous stirring, the reaction temperature and time were set at 200 °C for 1 hour. As the solution temperature rose, a color change from blue-green to black was observed at 125 °C. The black color persisted until the reaction was stopped. Pt-Ni nanocubes were collected and purified several times by adding toluene and centrifuging them at 2000 rpm for 1 minute. Subsequently, the nanocubes were dispersed in hexane.

### Platinum ion treatment of core-shell nanocubic structures

In a vial, the prepared Pt-Ni nanocubes were argon-dried to volatilize the hexane solvent, redispersed in 9 mL 1-octadecene, and transferred to a dry 3-neck flask. Under argon flow protection and continuous stirring, the temperature of the solution was raised to 80 °C. 80 mg chloroplatinic acid hexahydrate (H₂PtCl₆•₆H₂O) dissolved in 3 mL oleylamine (C₁₈H₃₇N) was added to the flask via injection method. The solution temperature was then increased to 200 °C. After 1 hour of reaction time, the ion treated Pt-Ni nanocubes were collected and purified several times by adding ethanol and centrifuging.

### Preparation of hollow core-shell nanocubic structures

In a vial, the ion treated Pt-Ni nanocubes were argon-dried to volatilize the hexane solvent. 1 mL acetic acid was then added to the vial to facilitate the selective etching of nickel. The mixture was sonicated for 30 minutes. Afterward, the sample was left to stand undisturbed overnight. Hollow nanostructures (e.g., hollow nanocubic structures) were collected and washed 3 times in DI water and by centrifugation at 2000 rpm for 1 minute. A final wash was carried out in isopropanol. Finally, the hollow nanostructures were dispersed in isopropanol. Reaction temperature may vary from 20 °C ~ 90 °C. Reaction time may vary from 1 min to 7 days.

### Instruments

The morphology of the surfaces was meticulously examined using a Scanning Electron Microscope (SEM, QUANTA FEG 650) from FEI, equipped with a field emitter. X-ray Diffraction (XRD) patterns were procured using a Bruker D8 Advance X-ray diffractometer, employing Cu Kα radiation and operated at 40 kV voltage and a 40 mA current. Transmission Electron Microscopy (TEM) images were obtained via an FEI Tecnai 20 microscope, accelerated at 200 kV. Energy Dispersive X-Ray spectrometer (EDS) mapping and High-Angle Annular Dark-Field (HAADF) imaging were acquired using the precision-oriented Titan3^{™} 80-300 S/TEM, operating at an acceleration of 300 kV.

All electrochemical analyses were conducted at a steady room temperature of 25 °C on a specialized electrochemical workstation. The setup comprised a three-electrode electrochemical system with a Rotating Disk Electrode (RDE) mechanism. A Glassy Carbon Working Electrode (GCE, 5 mm diameter, 0.196 cm²), paired with a graphite rod counter electrode and a 3.0 M KCl saturated Ag/AgCl reference electrode, were consistently employed. Potentials were uniformly referenced to the Reversible Hydrogen Electrode (RHE). Cyclic Voltammetry (CV) was initiated at a 50 mV s⁻¹ rate, adjacent to the H⁺/H₂ reaction's thermodynamic potential. The zero-current point was identified as the reaction potential of the hydrogen electrode, established at -0.287 V. Thus, potentials gauged with an Ag/AgCl electrode may be transposed by E (RHE) = E (Ag/AgCl) + 0.287 V. Preceding the electrochemical evaluations, samples were primed on commercial carbon supports to ensure optimal dispersion. Catalysts were synthesized by integrating the samples onto a commercial carbon framework (XC-72R). For benchmarking purposes, commercial Pt/C (20 wt%, Sigma-Aldrich) was employed. Electrodes were crafted by ultrasonically dispersing the catalyst in a solution of water, iso-propanol, and a 5 wt% Nafion solution for 30 minutes. Subsequently, 10 µL of this catalyst ink was applied onto the GCE surface, which was then air-dried. The platinum content for all catalysts was maintained at 17 µg cm⁻², a measure validated by subsequent ICP-MS evaluations.

CV characterization for the catalysts, in an oxygen-deprived environment, was predominantly executed in the 0.1-1.1 V (versus RHE) potential range at a 50 mV s⁻¹ scan rate in a nitrogen-saturated 0.1 M HClO₄ solution. ORR polarization curves were ascertained in an oxygen-rich 0.1 M HClO₄ electrolyte, with a 1600 rpm rotation and a 10 mV s⁻¹ scan rate. For the CV activation and ORR procedure concerning Pt-Ni nanocatalysts, the inherent ORR catalyst activity was immediately gauged post a ten-cycle CV activation. Durability testing was executed in an oxygen-rich 0.1 M HClO₄ solution, spanning a voltage range from 0.6-1.0 V at ambient temperature.

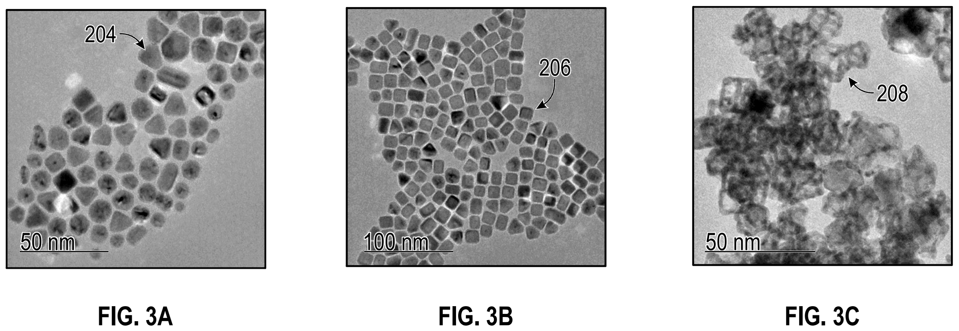

Analysis of the information obtained from microscopy and electrochemical analysis is described in the subsequent paragraphs, with reference being made to previously described methods steps and structures. For instance, FIG. 3A-3D are TEM images throughout the method 100, wherein FIG. 3A shows a core-shell structure 204, FIG. 3B shows a core-shell nanostructure 206, and FIG. 3C shows a hollow nanostructure 208.

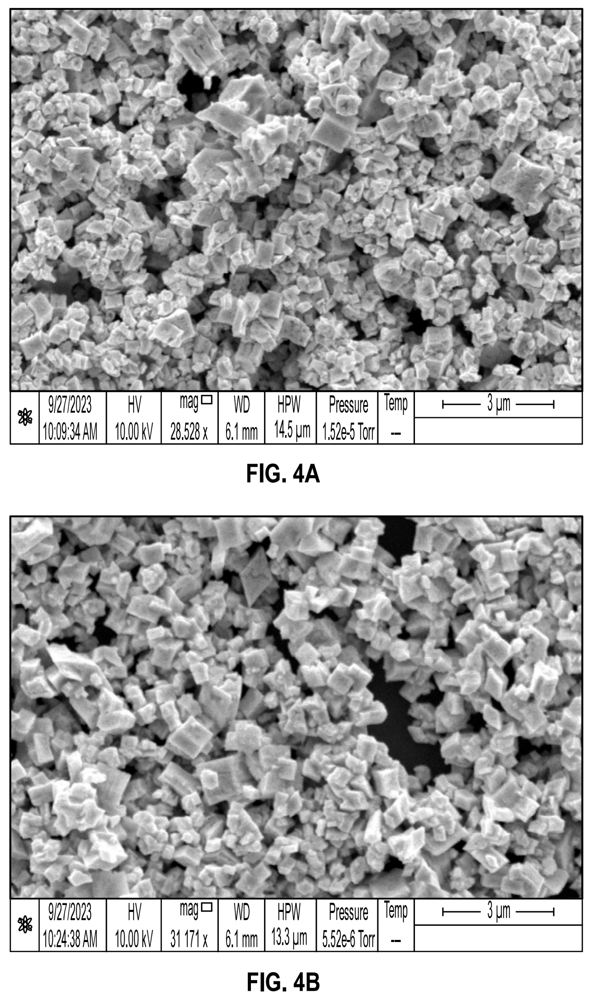

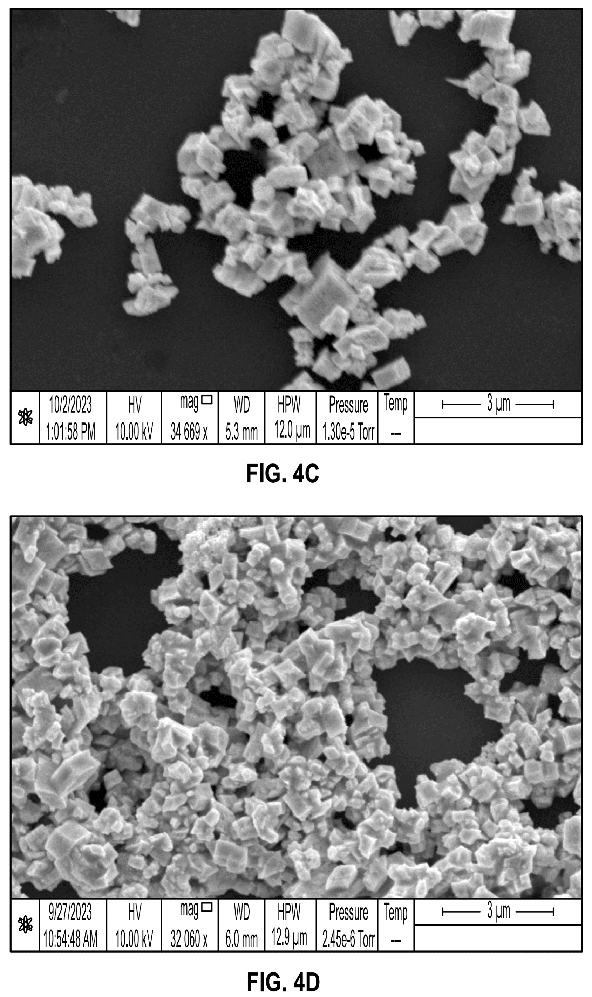

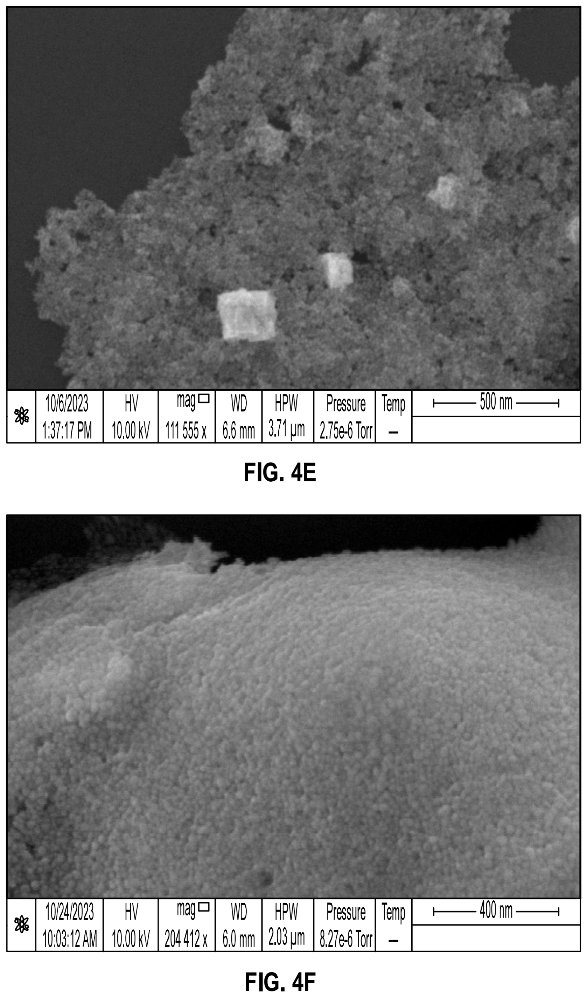

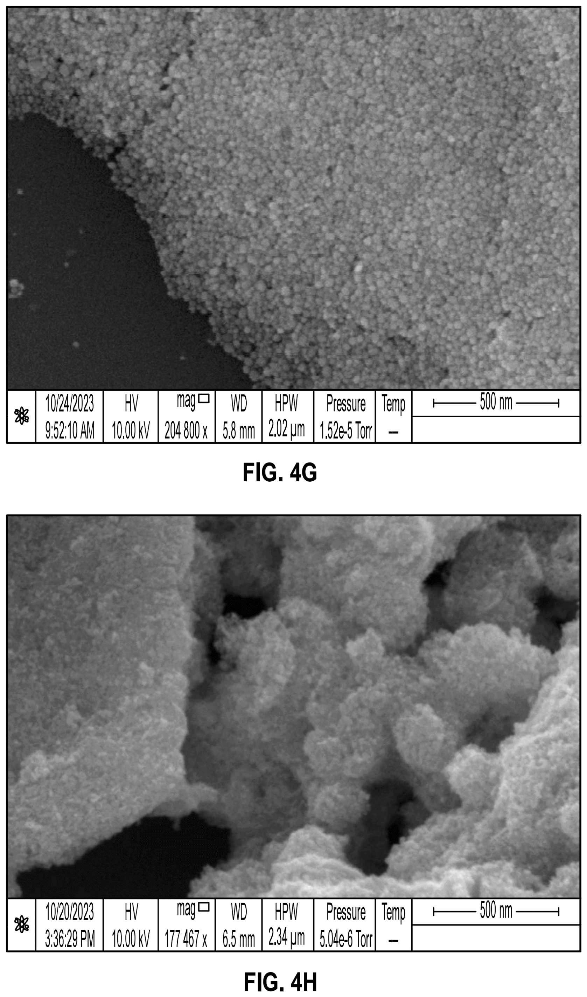

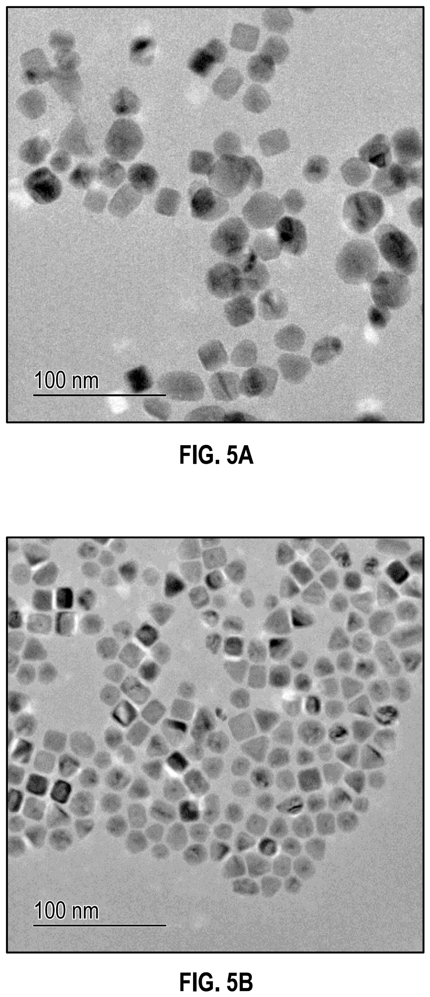

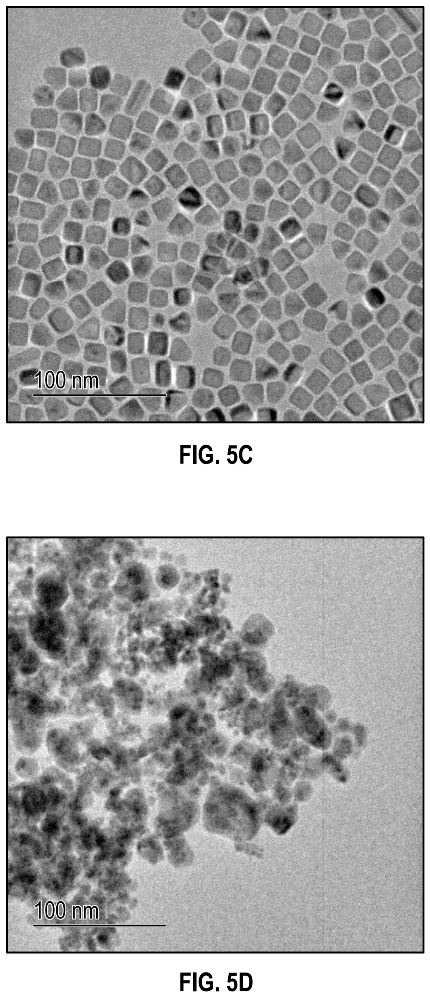

To better understand the effects on morphology as a result of changing the molar ratio of Pt relative to Ni during the formation of the core-shell nanostructures 206 (e.g., operation 120), a series of core-shell nanostructures were formed using pure Pt (FIG. 4A) and a molar ratio (Pt:Ni) of 2:1 (FIG. 4B), 1:1 (FIG. 4C), 1:2 (FIG. 4D), 1:4 (FIG. 4E and FIG. 5A), 1:6 (FIG. 4F and FIG. 5B), 1:8 (FIG. 4G and FIG. 5C), and 1:10 (FIG. 4H and FIG. 5D). It was determined that when, the size of final products was changed from micro size to nano size. Pt-Ni nanocubes were formed at the Pt/Ni feeding ratio of 1:6 and 1:8 respectively. The feeding ratio corresponds to the size and/or shape of the resulting structures. Additionally, it was found that at such Pt/Ni feeding ratios, the resulting nanostructures favored the formation of a nanocubic structure as evidenced in FIG. 5A-5D.

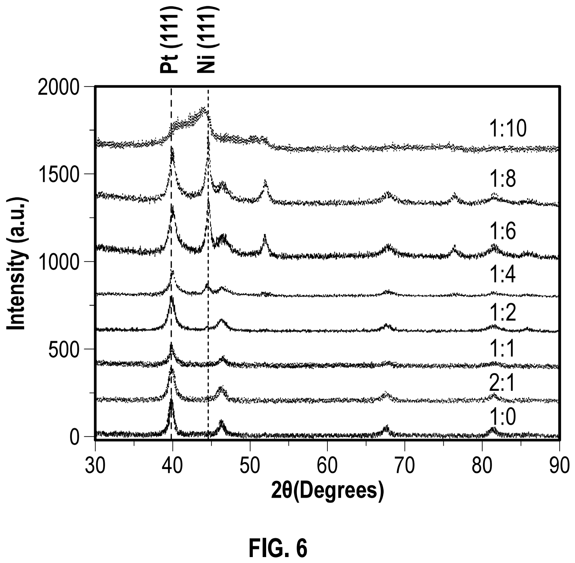

Figure 6 shows XRD patterns of the effect of feeding ratio of Pt/Ni on the morphology of products resulting from operation 120. Final products with pure Pt phase were formed when the Pt/Ni feeding ratio lower than 1:4. When the Pt/Ni feeding ratio is increased to 1:4, obvious Nickel (111) crystal facet at 44.3° was found. Pt-Ni alloying phase was found when the Pt/Ni feeding ratio higher than 1:8.

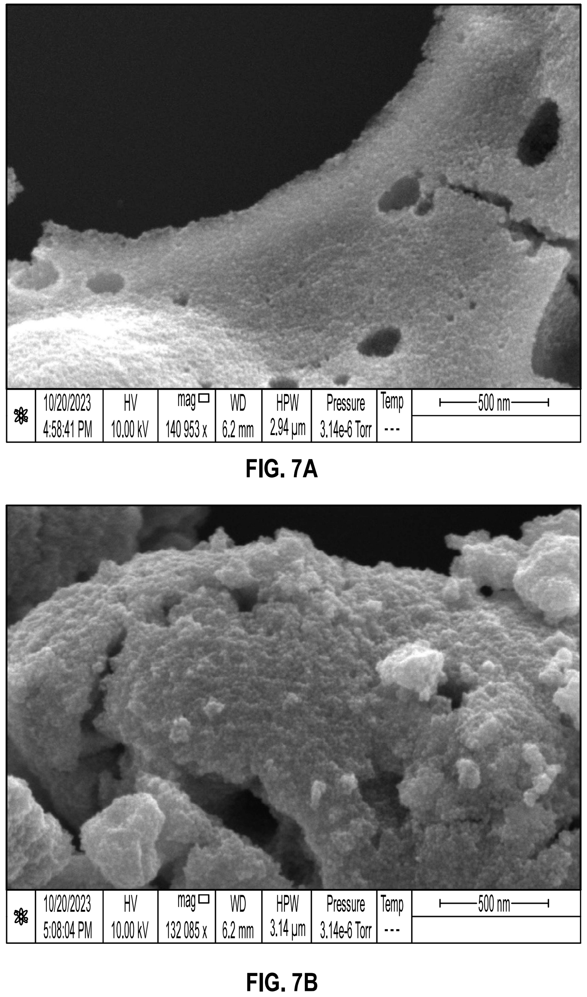

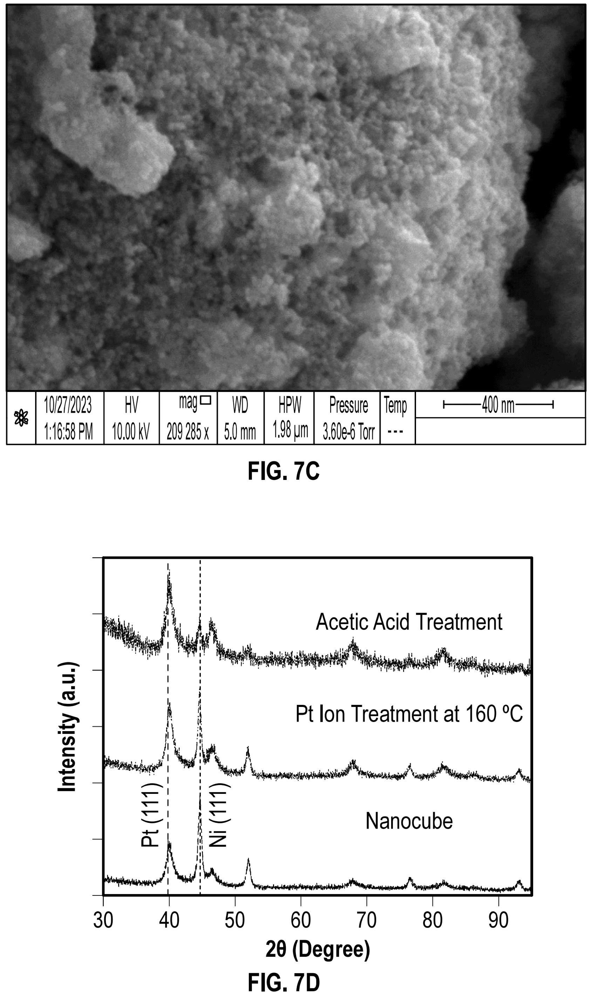

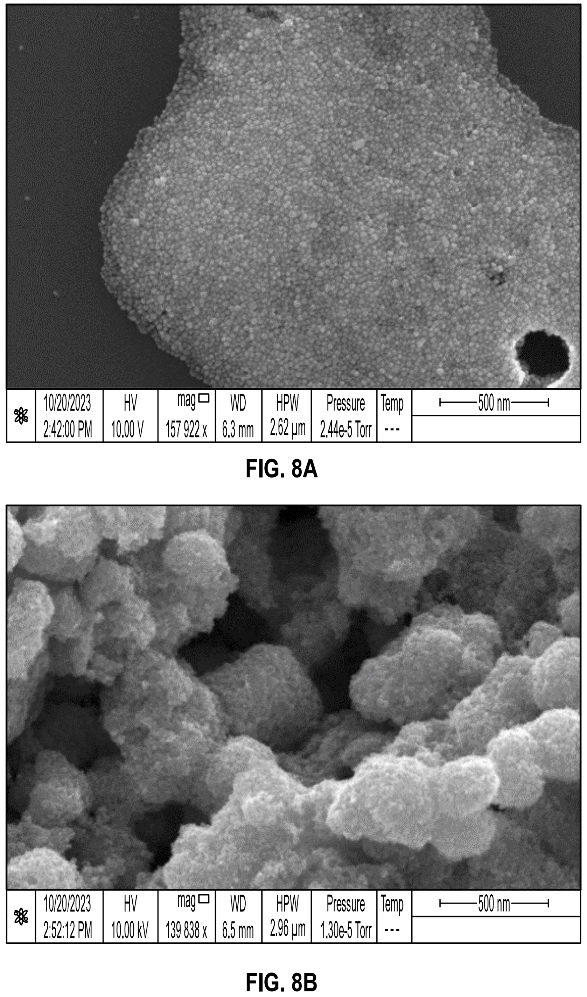

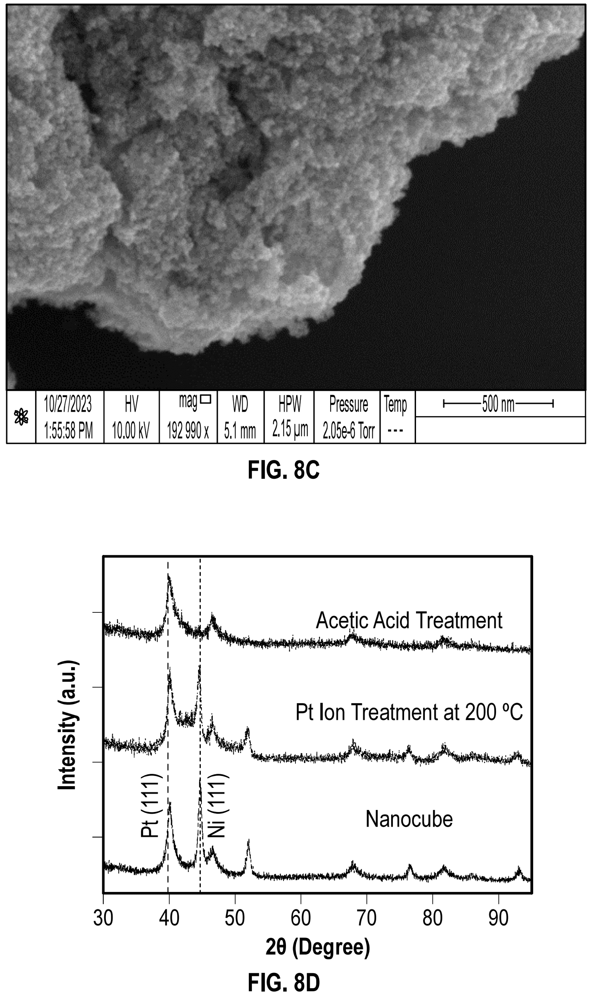

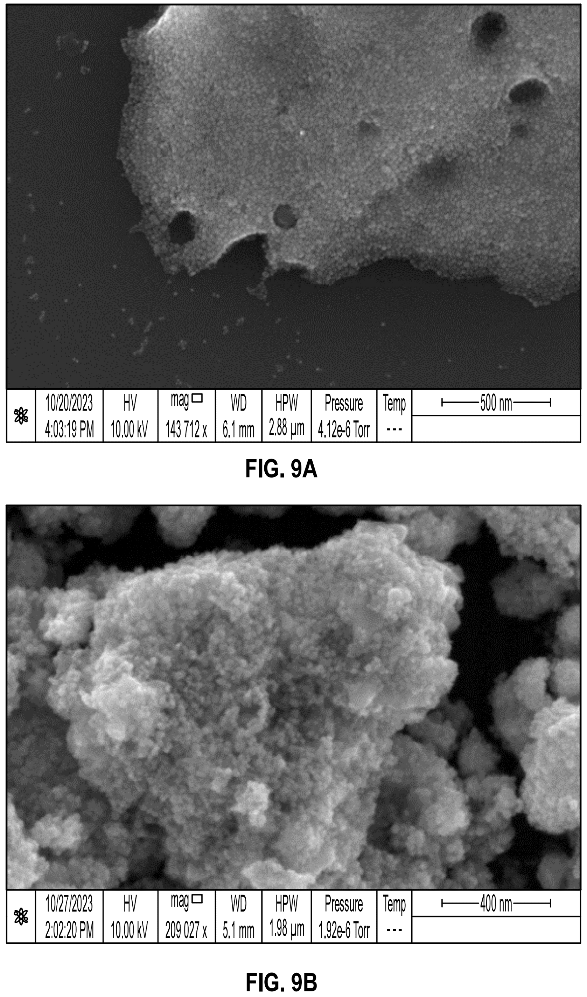

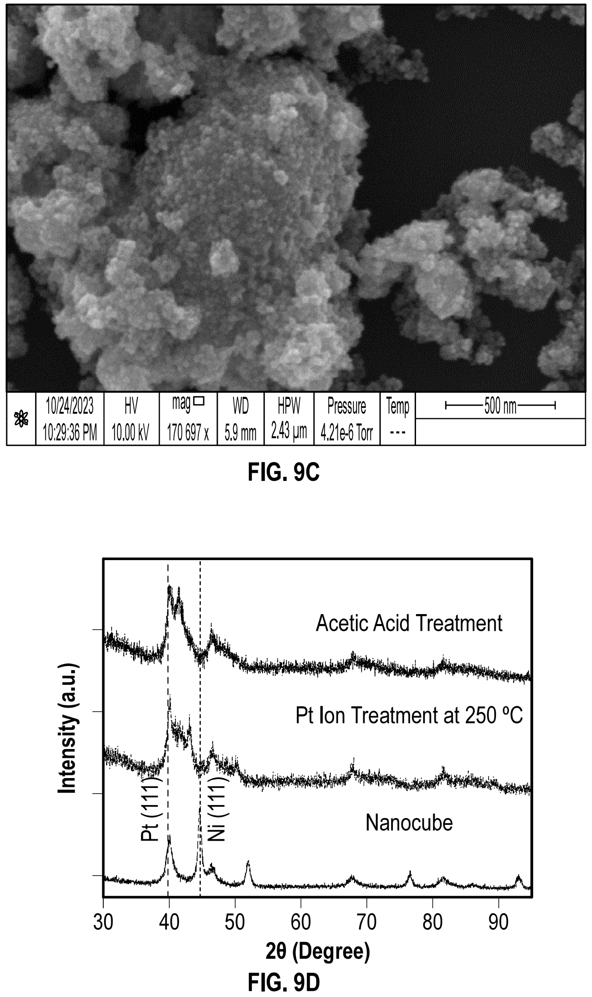

A series of Pt ion treatments were conducted on core-shell nanostructures 206 to determine the effects of the temperature of the Pt ion treatment of operation 130 have on the resulting morphology of the hollow nanostructures 208 after etch treatment of operation 140. FIG. 7A, FIG. 8A, and FIG. 9A, each show an agglomeration of core-shell nanostructures prior to the Pt ion treatment of operation 130. The nanostructures shown in each of FIG. 7A, FIG. 8A, and FIG. 9A were formed using the same process. In other words, the nanostructures shown in each of FIG. 7A, FIG. 8A, and FIG. 9A are the same. FIG. 7B, FIG. 8B, and FIG. 9B, each show the corresponding agglomeration of core-shell nanostructures after the Pt ion treatment of operation 130 at differing temperatures, wherein FIG. 7B shows the nanostructures after undergoing the Pt ion treatment at 160 °C, FIG. 8B shows the nanostructures after undergoing the Pt ion treatment at 200 °C, and FIG. 9B shows the nanostructures after undergoing the Pt ion treatment at 250 °C. FIG. 7C, FIG. 8C, and FIG. 9C, each show the corresponding agglomeration of hollow nanostructures after undergoing the etch treatment of operation 140. FIG. 7D, FIG. 8D, and FIG. 9D, each show the corresponding XRD patterns of the nanostructures at each operation, respectively.

While no obvious difference was found from SEM images (e.g., FIG. 7A-7C, FIG. 8A-8C, and FIG. 9A-9C), the XRD analysis (e.g., FIG. 7D, FIG. 8D, and FIG. 9D) indicates that the Pt ion treatment temperature has an impact on alloying and crystalline phase of final products. The intensity of nickel (111) at 44.3° is decreased when increasing the Pt ion treatment temperature from 160 °C to 250 °C, which means Pt ion can easily replace surface nickel atoms at high temperatures. After the etch treatment (operation 140), the XRD analysis of the hollow nanostructures formed after a Pt ion treatment at 250 °C show the formation of a mixed phase, while pure Pt-Ni alloying phase is formed after a Pt ion treatments at 160 °C and 200 °C.

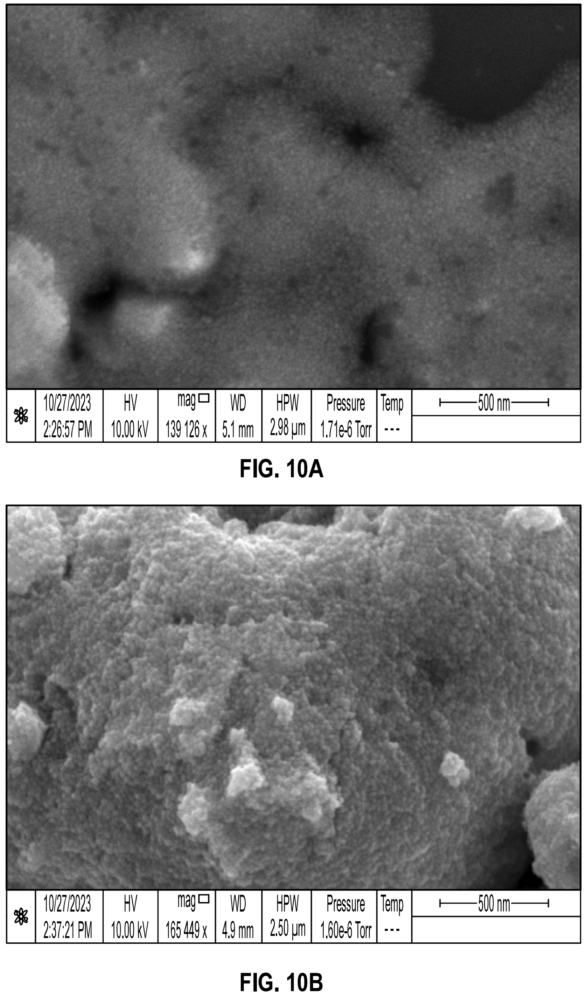

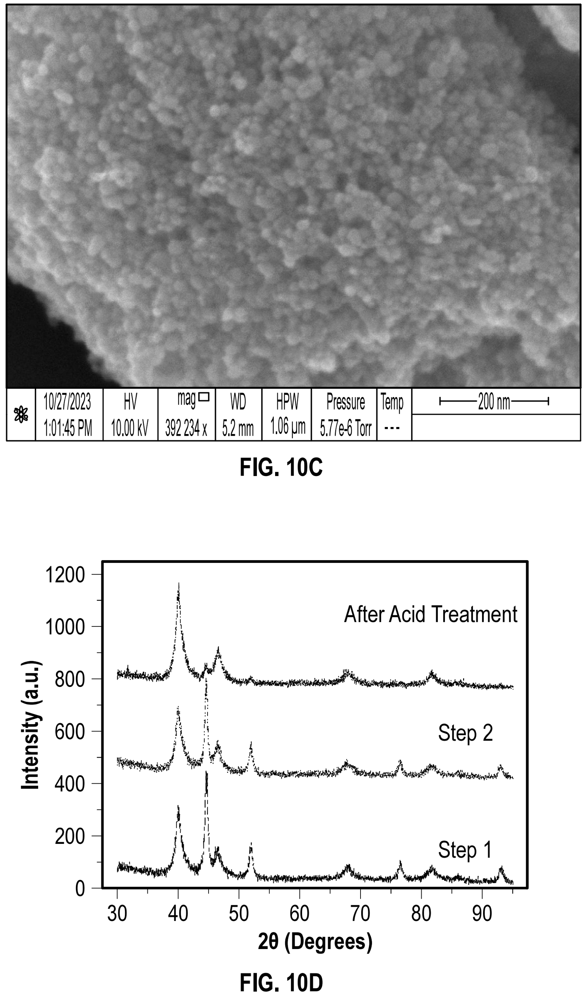

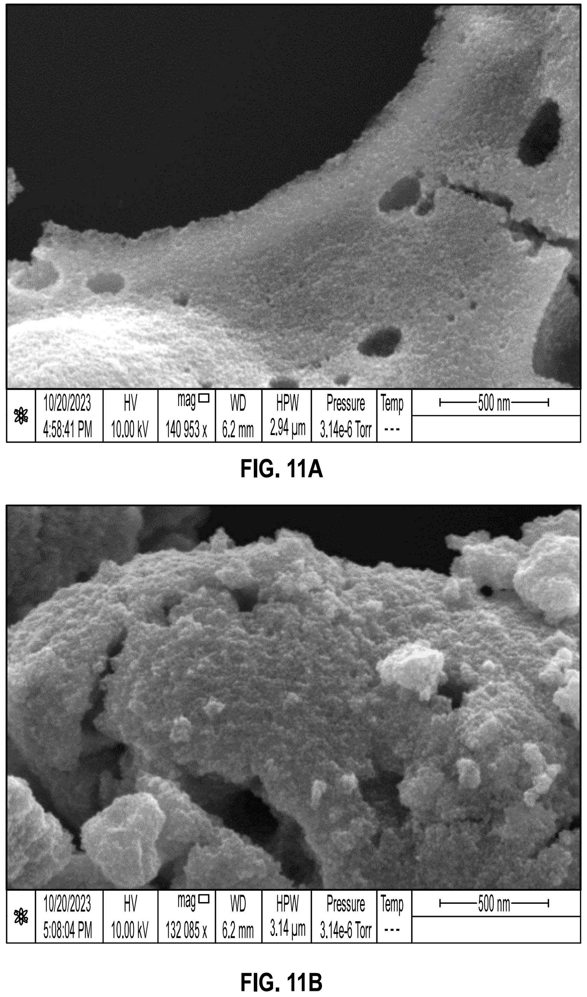

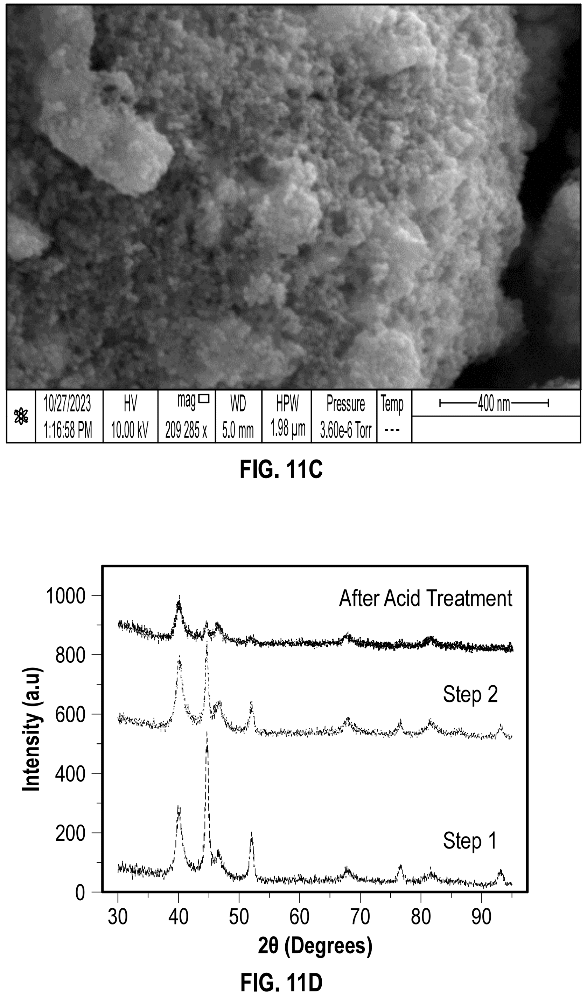

A series of Pt ion treatments were conducted on core-shell nanostructures 206 to determine the effects of the Pt concentration of the Pt ion treatment of operation 130 have on the resulting morphology of the hollow nanostructures 208 after etch treatment of operation 140. FIG. 10A and FIG. 11A, each show an agglomeration of core-shell nanostructures prior to the Pt ion treatment of operation 130. The nanostructures shown in each of FIG. 10A and FIG. 11A were formed using the same process. In other words, the nanostructures shown in each of FIG. 10A and FIG. 11A are the same. FIG. 10B and FIG. 11B, each show the corresponding agglomeration of core-shell nanostructures after the Pt ion treatment of operation 130 at differing temperatures, wherein FIG. 10B shows the nanostructures after undergoing the Pt ion treatment using a Pt²⁺ concentration of 3.3 mg/mL and FIG. 11B shows the nanostructures after undergoing the Pt ion treatment using a Pt²⁺ concentration of 13.3 mg/mL. FIG. 10C and FIG. 11C, each show the corresponding agglomeration of hollow nanostructures after undergoing the etch treatment of operation 140. FIG. 10D and FIG. 11D, each show the corresponding XRD patterns of the nanostructures at each operation, respectively. From such analysis, it was determined that the ion concentration used in Pt ion treatment of operation 130 had a minimal effect on the alloying and crystalline phase of final products.

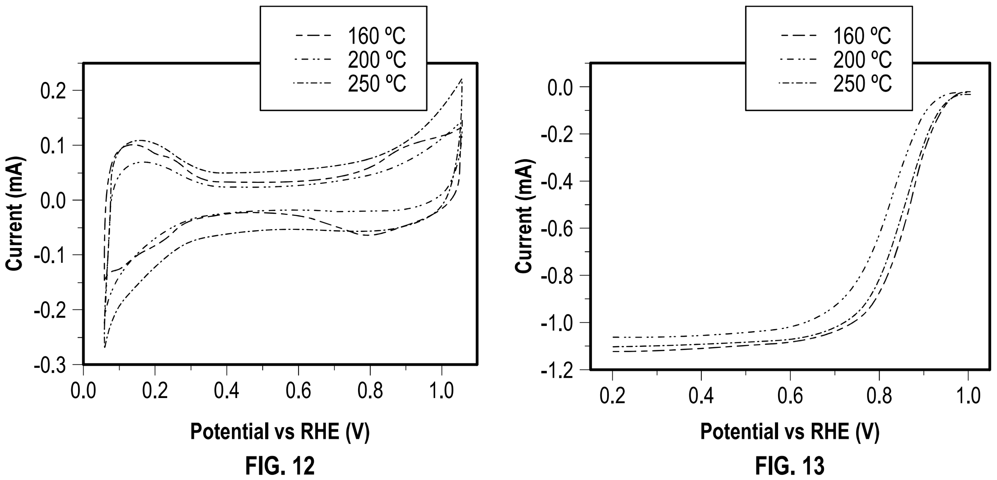

The Pt-Ni hollow nanocatalysts shown in FIG. 7C, FIG. 8C, and FIG. 9C were loaded onto carbon supports and analyzed to evaluate their oxygen reduction reaction performance, via cyclic voltammetry analysis (FIG. 12) and linear sweeping voltammetry analysis (FIG. 13). From such analysis, it was found that Pt-Ni hollow nanocatalysts prepared using a Pt ion treatment conducted at 160 °C exhibit the higher surface area, lower overall potentials, and higher mass activity.

Overall, the present disclosure provides a method by which to prepare hollow nanostructures. More specifically, the method disclosed herein uses a seed-assisted process to form hollow nanocubic structures for potential use in catalyst operations. The process involves forming a Pt seed solution and introducing a metal compound to grow a core-shell nanostructure, such as a core-shell nanocubic structure composed of an alloy formed between the Pt of the Pt seed solution (e.g., chloroplatinic acid hexahydrate) and the metal compound (e.g., nickel (II) acetylacetonate). The core-shell nanostructure may then be subjected to an Pt ion treatment to stabilize the edges of the core-shell nanostructure, followed by an etching operation to remove an interior portion thereof. The hollow nanocubic structures prepared via the method disclosed herein exhibit a catalytic surface area, which allows for increased electrochemical performance. The method disclosed herein can be extended to the synthesis of a variety of bimetallic alloy nanocrystals, and enables the development of Pt-metal nanocages or nanoframes.

### ASPECTS LISTING

The present disclosure provides, among others, the following aspects, each of which may be considered as optionally including any alternate aspects:
Aspect 1. A method for preparing hollow nanostructures, the method comprising:
   preparing a solution of platinum (Pt) seeds;
   introducing a metal source comprising a metal compound to the solution of Pt seeds to form a solution of core-shell nanocubes, the core-shell nanocubes comprising a Pt-metal alloy; and
   etching an interior portion of at least one of the core-shell nanocubes to form a hollow nanocubic structure.
Aspect 2. The method of aspect 1, wherein the solution of Pt seeds is prepared from a Pt source comprising hexahydroxy platinic acid (H₂Pt(OH)₆).
Aspect 3. The method of any aspects 1-2, wherein the metal compound comprises a Group 8-12 metal.
Aspect 4. The method of any aspects 1-3, wherein the metal compound comprises nickel (II) acetylacetonate.
Aspect 5. The method of any aspects 1-4, wherein the hollow nanocubic structure comprises a side length in a range from about 10 nm to about 2 µm.
Aspect 6. The method of any aspects 1-5, wherein the solution of core-shell nanocubes comprises a molar ratio of Pt relative to the metal compound in a range from about 1:6 to about 1:8 (Pt:metal compound).
Aspect 7. A method for preparing nanoframe structures, the method comprising:
   preparing a solution of platinum (Pt) seeds;
   introducing a metal source comprising a metal compound to the solution of Pt seeds to form a solution of core-shell nanocubes, the core-shell nanocubes comprising a Pt-metal alloy;
   performing a platinum ion treatment on the core-shell nanocubes to stabilize the Pt-metal alloy; and
   etching an interior portion of at least one of the core-shell nanocubes to form a hollow nanocubic structure.
Aspect 8. The method of aspect 7, wherein the solution of Pt seeds is prepared from a Pt source comprising hexahydroxy platinic acid (H₂Pt(OH)₆).
Aspect 9. The method of any aspects 7-8, wherein the metal compound comprises a Group 8-12 metal.
Aspect 10. The method of any aspects 7-9, wherein the metal compound comprises nickel (II) acetylacetonate.
Aspect 11. The method of any aspects 7-10, wherein the hollow nanocubic structure comprises a side length in a range from about 10 nm to about 2 µm.
Aspect 12. The method of any aspects 7-11, wherein the solution of core-shell nanocubes comprises a molar ratio of Pt relative to the metal compound in a range from about 1:6 to about 1:8 (Pt:metal compound).
Aspect 13. The method of any aspects 7-12, wherein the hollow nanocubic structure has a surface area in a range from about 600 nm² to about 24 µm².
Aspect 14. A method for preparing nanoframe structures, the method comprising:
   preparing a solution of platinum (Pt) seeds;
   introducing a metal source comprising a metal compound to the solution of Pt seeds to form a solution of core-shell nanostructure, the core-shell nanocubes comprising a Pt-metal alloy;
   performing a platinum ion treatment on the core-shell nanostructure to stabilize the Pt-metal alloy; and
   etching an interior portion of at least one of the core-shell nanostructure to form a hollow nanostructure, the hollow nanostructure comprising a side length in a range from about 10 nm to about 2 µm.
Aspect 15. The method of aspect 14, wherein the Pt-metal alloy comprises a Pt-nickel alloy, a Pt-iron alloy, a Pt-cobalt alloy, a Pt-palladium alloy, a Pt-silver alloy, a Pt-gold alloy, or combinations thereof.
Aspect 16. The method of any aspects 14-15, wherein the Pt-metal alloy is a Pt-nickel alloy.
Aspect 17. The method of any aspects 14-16, wherein a shape of the hollow nanostructure comprises a face-centered cubic nanoframe, a cubic nanoframe, a tetrahedral nanoframe, an octahedral nanoframe, a rhombic dodecahedral nanoframe, a decahedral nanoframe, an icosahedral nanoframe, a triangular prism nanoframe, a hexagonal prism nanoframe, a cuboctahedral nanoframe, a rod-shaped nanoframe, a bar-shaped nanoframe, a wire-shaped nanoframe, or combinations thereof.
Aspect 18. The method of any aspects 14-17, wherein the hollow nanostructure has a cubic nanoframe shape.
Aspect 19. The method of any aspects 14-18, wherein the hollow nanostructure comprises an electrochemical surface area (ECSA) in a range from about 5 m²/g_{(Pt)} to about 280 m²/g_{(Pt)}, as determined by cyclic voltammetry.
Aspect 20. The method of any aspects 14-19, wherein the hollow nanostructure comprises a mass activity in a range from about 0.1 A/mg_{(Pt)} to about 6.0 A/mg_{(Pt)}, as determined by cyclic voltammetry.

As is apparent from the foregoing general description and the specific aspects, while forms of the aspects have been illustrated and described, various modifications may be made without departing from the spirit and scope of the present disclosure. Accordingly, it is not intended that the present disclosure be limited thereby. Likewise, the term "comprising" is considered synonymous with the term "including." Likewise whenever a composition, an element, a group of elements, or a method is preceded with the transitional phrase "comprising," it is understood that we also contemplate the same composition, method. or group of elements with transitional phrases "consisting essentially of," "consisting of," "selected from the group of consisting of," or "Is" preceding the recitation of the composition, element, elements, or method, and vice versa, such as the terms "comprising," "consisting essentially of," "consisting of" also include the product of the combinations of elements listed after the term.

For purposes of this present disclosure, and unless otherwise specified, all numerical values within the detailed description and the claims herein are modified by "about" or "approximately" the indicated value, and consider experimental error and variations that would be expected by a person having ordinary skill in the art. For the sake of brevity, only certain ranges are explicitly disclosed herein. However, ranges from any lower limit may be combined with any upper limit to recite a range not explicitly recited, as well as, ranges from any lower limit may be combined with any other lower limit to recite a range not explicitly recited, in the same way, ranges from any upper limit may be combined with any other upper limit to recite a range not explicitly recited. For example, the recitation of the numerical range 1 to 5 includes the subranges 1 to 4, 1.5 to 4.5, 1 to 2, among other subranges. As another example, the recitation of the numerical ranges 1 to 5, such as 2 to 4, includes the subranges 1 to 4 and 2 to 5, among other subranges. Additionally, within a range includes every point or individual value between its end points even though not explicitly recited. For example, the recitation of the numerical range 1 to 5 includes the numbers 1, 1.5, 2, 2.75, 3, 3.80, 4, 5, among other numbers. Thus, every point or individual value may serve as its own lower or upper limit combined with any other point or individual value or any other lower or upper limit, to recite a range not explicitly recited.

As used herein, the indefinite article "a" or "an" shall mean "at least one" unless specified to the contrary or the context clearly indicates otherwise. For example, aspects comprising "a metal" include aspects comprising one, two, or more metals, unless specified to the contrary or the context clearly indicates only one metal is included.

While the foregoing is directed to aspects of the present disclosure, other and further aspects of the disclosure may be devised without departing from the basic scope thereof, and the scope thereof is determined by the claims that follow.

## Claims

1. A method for preparing hollow nanostructures, the method comprising:
preparing a solution of platinum (Pt) seeds;
introducing a metal source comprising a metal compound to the solution of Pt seeds to form a solution of core-shell nanocubes, the core-shell nanocubes comprising a Pt-metal alloy; and
etching an interior portion of at least one of the core-shell nanocubes to form a hollow nanocubic structure.

2. The method of claim 1, wherein the solution of Pt seeds is prepared from a Pt source comprising hexahydroxy platinic acid (H₂Pt(OH)₆).

3. The method of claim 1 or 2, wherein the metal compound comprises a Group 8-12 metal.

4. The method of any one of claims 1 to 3, wherein the metal compound comprises nickel (II) acetylacetonate.

5. The method of any one of claims 1 to 4, wherein the hollow nanocubic structure comprises a side length in a range from about 10 nm to about 2 µm.

6. The method of any one of claims 1 to 5, wherein the solution of core-shell nanocubes comprises a molar ratio of Pt relative to the metal compound in a range from about 1:6 to about 1:8 (Pt:metal compound).

7. A method for preparing nanoframe structures, the method comprising:
preparing a solution of platinum (Pt) seeds;
introducing a metal source comprising a metal compound to the solution of Pt seeds to form a solution of core-shell nanocubes, the core-shell nanocubes comprising a Pt-metal alloy;
performing a platinum ion treatment on the core-shell nanocubes to stabilize the Pt-metal alloy; and
etching an interior portion of at least one of the core-shell nanocubes to form a hollow nanocubic structure.

8. The method of claim 7, wherein the solution of Pt seeds is prepared from a Pt source comprising hexahydroxy platinic acid (H₂Pt(OH)₆).

9. The method of claim 7 or 8, wherein the metal compound comprises a Group 8-12 metal.

10. The method of any one of claims 7 to 9, wherein the metal compound comprises nickel (II) acetylacetonate.

11. The method of any one of claims 7 to 10, wherein the hollow nanocubic structure comprises a side length in a range from about 10 nm to about 2 µm.

12. The method of any one of claims 7 to 11, wherein the solution of core-shell nanocubes comprises a molar ratio of Pt relative to the metal compound in a range from about 1:6 to about 1:8 (Pt:metal compound).

13. The method of any one of claims 7 to 12, wherein the hollow nanocubic structure has a surface area in a range from about 600 nm² to about 24 µm².

14. A method for preparing nanoframe structures, the method comprising:
preparing a solution of platinum (Pt) seeds;
introducing a metal source comprising a metal compound to the solution of Pt seeds to form a solution of core-shell nanostructure, the core-shell nanocubes comprising a Pt-metal alloy;
performing a platinum ion treatment on the core-shell nanostructure to stabilize the Pt-metal alloy; and
etching an interior portion of at least one of the core-shell nanostructure to form a hollow nanostructure, the hollow nanostructure comprising a side length in a range from about 10 nm to about 2 µm.

15. The method of claim 14, wherein the Pt-metal alloy comprises a Pt-nickel alloy, a Pt-iron alloy, a Pt-cobalt alloy, a Pt-palladium alloy, a Pt-silver alloy, a Pt-gold alloy, or combinations thereof.

16. The method of claim 14 or 15, wherein the Pt-metal alloy is a Pt-nickel alloy.

17. The method of any one of claims 14 to 16, wherein a shape of the hollow nanostructure comprises a face-centered cubic nanoframe, a cubic nanoframe, a tetrahedral nanoframe, an octahedral nanoframe, a rhombic dodecahedral nanoframe, a decahedral nanoframe, an icosahedral nanoframe, a triangular prism nanoframe, a hexagonal prism nanoframe, a cuboctahedral nanoframe, a rod-shaped nanoframe, a bar-shaped nanoframe, a wire-shaped nanoframe, or combinations thereof.

18. The method of any one of claims 14 to 17, wherein the hollow nanostructure has a cubic nanoframe shape.

19. The method of any one of claims 14 to 18, wherein the hollow nanostructure comprises an electrochemical surface area (ECSA) in a range from about 5 m²/g_{(Pt)} to about 280 m²/g_{(Pt)}, as determined by cyclic voltammetry.

20. The method of any one of claims 14 to 19, wherein the hollow nanostructure comprises a mass activity in a range from about 0.1 A/mg_{(Pt)} to about 6.0 A/mg_{(Pt)},as determined by cyclic voltammetry.
